# EUROPEAN PATENT SPECIFICATION

(11) **EP 2 960 078 B1**
(45) Date of publication and mention of the grant of the patent: **24.07.2019**
(21) Application number: 14753629.6
(22) Date of filing: 17.02.2014
(51) Int. Cl.: B60C 5/01, B29D 30/08, B60C 7/00

(54) **TIRE, TIRE MANUFACTURING DEVICE, AND TIRE MANUFACTURING METHOD**
REIFEN, REIFENHERSTELLUNGSVORRICHTUNG UND REIFENHERSTELLUNGSVERFAHREN
PNEU, DISPOSITIF DE FABRICATION DE PNEU ET PROCÉDÉ DE FABRICATION DE PNEU

(30) Priority: 20.02.2013 JP 2013031449
(43) Date of publication of application: 30.12.2015
(73) Proprietor: Bridgestone Corporation, Tokyo 104-8340 (JP)
(72) Inventor: KON, Seiji, Tokyo 104-8340 (JP); HASEGAWA, Keiichi, Tokyo 104-8340 (JP); KOUNO, Yoshihide, Tokyo 104-8340 (JP)
(74) Representative: Oxley, Robin John George
(86) International application number: PCT/JP2014/053669
(87) International publication number: WO 2014/129427

(56) References cited:
- WO-A1-2011/021703
- JP-A- H05 116 504
- JP-A- H06 344 465
- JP-A- 2009 115 207

## Description

### Technical Field

The present invention relates to a tire formed at least partly by a resin material, and a tire manufacturing apparatus and a tire manufacturing method thereof.

### Background Art

Recently there is demand to employ thermoplastic resins, thermoplastic elastomers, and the like as tire materials in order to reduce weight, and also due to their ease of recycling. For example, a method is described in Patent Document 1 for joining together a pair of tire configuration members (tire frame halves) that are semi-toroidal shaped, divided in the tire axial direction. In the method, separate thermoplastic material that has been melted is infilled to a join portion of the tire frame halves. When this is being performed, the pair of tire configuration members is supported from the tire radial direction inside by a specialized jig.

Employing the separate thermoplastic material enables the strength of the join portion to be secured. However, various measures need to be taken in order to support the tire frame halves from the tire radial direction inside.

### Related Documents

### Related Patent Documents

Patent Document 1: Japanese Patent Application Laid-Open (JP-A) No. 2011-207166 Reference is also made to WO2011/021703, which discloses a tire according to the preamble of Claim 1 and a tire manufacturing apparatus according to the preamble of claim 3, and also to JP 05-116504 and JP 06344465.

### SUMMARY OF INVENTION

### Technical Problem

In consideration of the above circumstances, an object of the present invention is to provide a tire, tire manufacturing apparatus, and tire manufacturing method with which accurate support is performed with a specialized jig during joining of a pair of tire frame halves, and which obtain an excellent joint.

### Solution to Problem

A tire according to a first aspect (see independent claim 1) of the present invention includes: a tire frame member that is configured from a pair of tire frame halves, each formed using a resin material and including a bead portion, a side section, and a half-width crown half section, the tire frame halves being aligned with each other and joined together at leading ends of the crown half sections; and an engagement section that is formed on a tire radial direction inner side face of each of the crown half sections further to a tire width direction outer side than a joining portion between the crown half sections, and that engages with an outer face of a support jig that supports the pair of tire frame halves from the tire radial direction inner side during joining so as to restrict movement in a tire width direction with respect to the support jig, wherein the engagement section is formed along a tire circumferential direction; characterised in that the engagement section is segmented into a plurality of segments in the tire circumferential direction, which are disposed irregularly in the tire circumferential direction.

The crown half sections include regions on which a tread is disposed at the tire radial direction outer side. The bead portions are portions that touch the rim flange. The side portions are regions between the crown half bodies and the bead portion.

The tire according to the first aspect includes the tire frame member formed by combining the pair of tire frame halves. During manufacture of the tire frame member, when supporting the tire frame halves from the tire radial direction inside, the tire frame halves are pressed toward the tire radial direction outer side by a support jig so as to prevent displacement with respect to the support jig. Sometimes the tire frame halves move toward the tire axial direction outer side with respect to the support jig at this time.

Thus in the present invention, the engagement section is formed on the tire radial direction inner side face of each of the crown half sections of the tire frame halves further to a tire width direction outer side than the joining portion between the crown half sections, and the engagement section engages with an outer face of the support jig and restricts relative movement in the tire width direction with respect to the support jig. The engagement section includes any shape capable of restricting movement in the tire axial direction of the tire frame halves with respect to the support jig by the relationship between the engagement section and the outer face of the support jig, such as a projection shape, an indentation shape, or a step shape. Engagement of the engagement section with the outer face of the support jig enables movement of the tire frame halves in the tire axial direction with respect to the support jig to be suppressed. This thereby enables the tire frame halves to be supported accurately positioned by the support jig, enabling excellent joining to be obtained.

In a tire of a second aspect of the present invention, the engagement section is protrusion shaped so as to project from the tire radial direction inner side face of the crown half section.

This thereby enables the engagement section to be configured simply by forming the engagement section as a projection. Moreover, no thinned portion is formed in the thickness direction of the tire frame member, enabling the strength of the tire to be maintained better than in cases in which an indentation is formed.

In a tire of the first aspect of the present invention, the engagement section is formed along the tire circumferential direction.

Due to forming the engagement section along the tire circumferential direction, excellent prevention of relative movement in the axial direction between the tire frame halves and the support jig along the tire circumferential direction can be achieved. The meaning of "along the circumferential direction means disposing in a row along the tire circumferential direction. Thus configurations that are segmented in the tire circumferential direction are adopted, and configurations with dot shapes in a row along the tire circumferential direction may be adopted.

*deleted*

*deleted*

In a tire according to the first aspect of the present invention, the engagement section is segmented into plural segments in the tire circumferential direction and disposed irregularly in the tire circumferential direction.

Such irregular placement in the tire circumferential direction enables the effect of vibration during running to be suppressed.

A tire manufacturing apparatus according to a third aspect (see independent claim 3) of the present invention includes: plural arm sections capable of expanding or contracting in a tire radial direction and extending toward the tire radial direction outer side; a tire support member that is supported from the tire radial direction inner side by leading end portions of the arm sections disposed at the tire radial direction outer side, that is segmented into plural segments in the tire circumferential direction, that has an external face forming a circular ring shape around the inside periphery of the tire frame member, that contacts the inner face of the tire frame member, and supporting the pair of tire frame halves from the tire radial direction inner side; and a support engagement section that is formed on the tire radial direction outer face of the tire support member, and that engages with an engagement section formed further to a tire width direction outer side than a joining portion between the tire frame halves, wherein the engagement section is formed along a tire circumferential direction; characterised in that the engagement section is segmented into a plurality of segments in the tire circumferential direction, which are disposed irregularly in the tire circumferential direction.

In the tire manufacturing apparatus according to the third aspect, the tire support member is supported from the tire radial direction inside by the plural arm sections that extend out toward the radial direction outer side. The tire support member is segmented into plural segments in the tire circumferential direction, and has the external face that forms a circular ring shape around the inside periphery of the tire frame member, contacts the inner face of the tire frame member, and supports the pair of tire frame halves from the tire radial direction inside. When doing so, the support engagement section is formed on the tire radial direction outer face of the tire support member, and engages with the engagement section of the tire frame halves. Thus relative movement between the tire frame halves and the tire support member in the tire axial direction can be prevented, even when pressing force is applied to the tire frame halves toward the tire radial direction outer side from the tire support member in order to prevent displacement with the support jig. The tire frame halves are accordingly supported accurately positioned by the tire support member, enabling excellent joining to be obtained.

After joining, the arm sections are contracted toward the tire radial direction inside and separated from the tire support member, thereby enabling the tire support member to be removed from the tire frame member from the tire radial direction inside.

In a tire manufacturing apparatus according to a fourth aspect of the present invention, the support engagement section is an indentation formed at the tire radial direction outer face of the tire support member.

Configuring the support engagement section as an indentation enables the engagement section on the tire side to be formed as a projection. This means that there are no thin portions formed in the thickness of the tire frame member, enabling the strength of the tire to be better maintained than in cases in which a protrusion is formed (cases in which an indentation is formed at the tire frame member side).

In a tire manufacturing apparatus according to the third aspect of the present invention, the support engagement section is formed along the tire circumferential direction.

Forming the support engagement section along the tire circumferential direction, enables excellent prevention of relative movement in the tire axial direction between the tire frame halves and the support jig along the tire circumferential direction.

In the tire manufacturing apparatus according to a fifth aspect of the present invention, the support engagement section is formed along the entire circumference in the tire circumferential direction.

Forming the support engagement section in this manner along the entire circumference in the tire circumferential direction enables excellent prevention of relative movement in the tire axial direction between the tire frame halves and the support jig at each location in the tire circumferential direction.

Moreover, excellent prevention of relative movement between the tire frame halves and the support jig in which the engagement section is a segmented shape in the tire circumferential direction is enabled.

A tire manufacturing method according to a fifth aspect (see independent claim 6) of the present invention is a tire manufacturing method for manufacturing a tire according to the first or the second aspect using the tire manufacturing apparatus of the third aspect, and includes: engaging the engagement section with the support engagement section; adding a resin material and joining the pair of tire frame halves; retracting the leading end portions of the arm sections to the tire radial direction inner side and separating the leading end portions of the arm sections from the tire support member; and removing the tire support member from the inner side of the tire frame halves.

In the tire manufacturing method according to the sixth aspect, the engagement sections of the tire frame halves are engaged with and supported by the support engagement section of the tire support member. Thus displacement of the tire frame halves in the tire axial direction with respect to the tire support member is prevented, enabling resin material to be added to the pair of tire frame halves and excellent joining to be achieved. When removing the tire frame member from the tire support member after joining, the leading end portions of the arm sections are retracted toward the radial direction inner side and separated from the tire support member, so that the tire support member can be withdrawn from tire radial direction inside.

### Advantageous Effects of Invention

The configuration of the tire of the first aspect as explained above enables relative movement in the tire axial direction between the tire frame halves and the support jig to be prevented and the tire frame halves to be supported accurately positioned by the support jig, thereby enabling excellent joining to be achieved.

Configuring the tire of the second aspect as described above enables the engagement section to be configured simply, and not forming thin portions in the thickness of the tire frame member enables the strength of the tire to be maintained better than in cases in which an indentation is formed.

*deleted*

*deleted.*

*deleted.*

Configuring the tire manufacturing apparatus of the third aspect as described above enables the tire frame halves to be supported with more accurate positioning by the tire support member, enabling excellent joining to be obtained.

Due to configuring the tire manufacturing apparatus of the fourth aspect as described above, thinned portions are not formed in the thickness of the tire frame member, enabling the tire strength to be maintained better than in cases in which a protrusion is formed (cases in which an indentation is formed on the tire frame member side).

*deleted.*

Configuring the tire of the fifth aspect as described above enables excellent prevention to be achieved of relative movement in the tire axial direction between the tire frame halves and the support jig, at each location in the tire circumferential direction.

Configuring the method of the sixth aspect as described above enables displacement in the tire axial direction of the tire frame halves with respect to the tire support member to be prevented, enabling the resin material to be adjoined to the pair of tire frame halves, and enabling excellent joining to be obtained.

### BRIEF DESCRIPTION OF DRAWINGS

Fig. 1 is a perspective view of a cross-section of part of a tire according to an example which is not according to the present invention, but is useful for understanding the invention.
Fig. 2 is a perspective cross-section of a bead portion of the tire of Fig. 1, mounted to a rim.
Fig. 3 is a perspective view of a forming machine which is not according to the present invention, but is useful for understanding the invention.
Fig. 4 is an exploded perspective view of a support jig.
Fig. 5 is a perspective view of an assembled state of a support jig.
Fig. 6A is a tire radial direction cross-section of one half of tire frame halves in a state supported by a support jig.
Fig. 6B is an enlarged cross-section of the join portion in Fig. 6A.
Fig. 7 is an enlarged tire radial direction cross-section in a tire radial direction of one half of tire frame halves in a state supported by a support jig after finishing joining.
Fig. 8 is a perspective view illustrating part of a forming machine, and joining processing using an extruder.
Fig. 9A is a face-on view of a tire frame member in a supported state by a support jig, as seen from along the tire axial direction.
Fig. 9B is a face-on view illustrating an operational state when a tire frame member is being removed from a support jig.
Fig. 10 is a perspective view of a tire according to another example which is not according to the present invention, but is useful for understanding the invention, with a portion illustrated in cross-section.
Fig. 11 is a perspective view of a tire according to an exemplary embodiment of the invention, with a portion illustrated in cross-section.
Fig. 12 is a perspective view of a tire according to another example which is not according to the present invention, but is useful for understanding the invention, with a portion illustrated in cross-section.

### DESCRIPTION OF EMBODIMENT

Examples and an exemplary embodiment are given below, and explanation follows regarding the examples and exemplary embodiment of the present invention.

### First Example Embodiment

### Tire Configuration

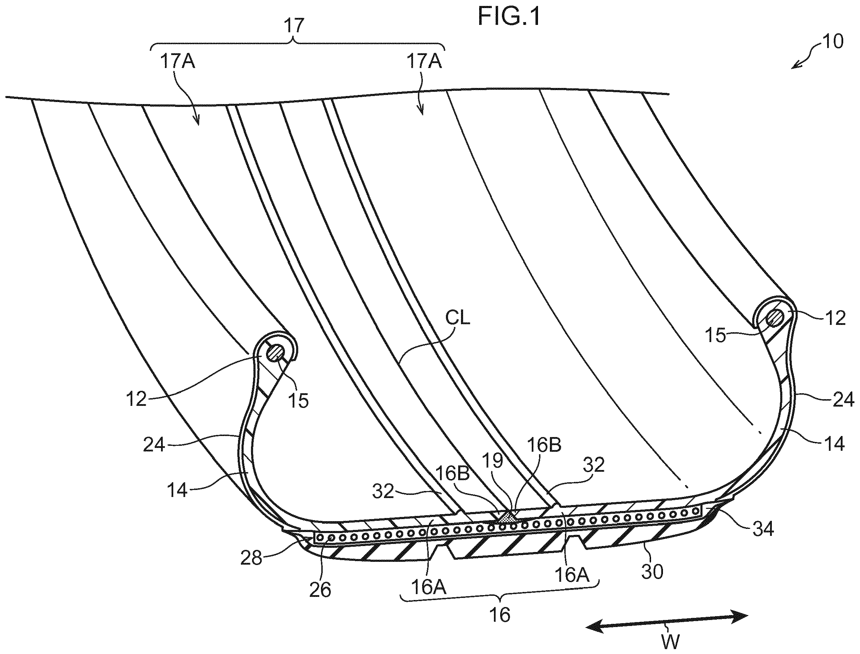

Explanation first follows regarding a first example, which is not according to the present invention, but is useful for understanding the invention. As illustrated in Fig. 1, a tire of the present example is a pneumatic tire employed by internally filling with air. A tire 10 includes a tire frame member 17. The tire frame member 17 includes a pair of bead portions 12, side sections 14 that extend out from the bead portions 12 toward the tire radial direction outside, and a crown section 16 that couples together each of the side sections 14 at the tire radial direction outside ends thereof.

The tire frame member 17 is configured by a pair of tire frame halves 17A that are each integrally formed by a single bead portion 12, a single side section 14, and a half-width crown half section 16A, and have the same circular ring shape as each other. Leading ends 16B of the crown half sections 16A are formed with a shape tapering toward the side of the tire equatorial plane CL.

Protrusions 32 are formed as an engagement section to the tire radial direction inner side face of the crown half sections 16A. The protrusions 32 are disposed further to the tire equatorial plane CL than the center in the tire width direction W of each of the crown half sections 16A, and are disposed further to the tire width direction outside than the leading ends 16B of the crown section 16. The protrusions 32 are each formed in a ring shape around the entire periphery along the tire circumferential direction. The protrusions 32 have semi-circular shaped cross-sections. The protrusions 32 engage with indentations 48D serving as a support engagement section, described below. The height H1 of the protrusions 32 is preferably within the range of from 0.3 mm to 5 mm. This is because there is a possibility of the tire frame halves 17A falling out of engagement and moving in the tire width direction W with respect to a tire support member 48, described below, when the height H1 is lower than 0.3 mm, and because the tire frame halves 17A are more difficult to fit to the tire support member 48 when the height H1 is higher than 5 mm.

The pair of tire frame halves 17A are aligned with each other at the leading ends 16B of the crown half sections 16A, so as to form the tire frame member 17 by joining the portions at the tire equatorial plane CL together. A thermoplastic welding material 19 is employed at the join between portions at the tire equatorial plane CL.

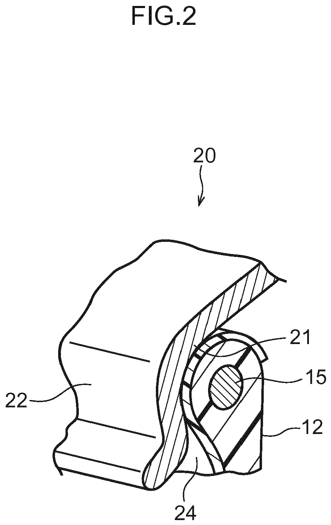

As illustrated in Fig. 2, each of the pairs of bead portions 12 makes close contact with a bead seat 21 and a rim flange 22 of a rim, so as to maintain the internal pressure of air filled inner side the tire. A tread member 30 configuring a tire tread that is the ground contact portion of the tire is disposed at the tire radial direction outside of the crown section 16.

The tire frame member 17 is formed from a resin material. The resin material employed here does not encompass vulcanized rubber. Examples of the resin material include thermoplastic resins (including thermoplastic elastomers), thermoset resins, and other general purpose resins, and also include engineering plastics (including super engineering plastics).

Thermoplastic resins (including thermoplastic elastomers) are polymer compounds of materials that soften and flow with increased temperature, and that adopt a relatively rigid and strong state when cooled. In the present specification, out of these, distinction is made between polymer compounds forming materials that soften and flow with increasing temperature, that adopt a relatively hard and strong state on cooling, and that have a rubber-like elasticity, considered to be thermoplastic elastomers, and polymer compounds forming materials that soften and flow with increasing temperature, that adopt a relatively hard and strong state on cooling, and do not have a rubber-like elasticity, considered to be non-elastomer thermoplastic resins.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic resin materials have, for example, a deflection temperature under load (at 0.45 MPa during loading), as defined by ISO 75-2 or ASTM D648, of 78°C or greater, a tensile yield strength, as defined by JIS K7113, of 10 MPa or greater, and a tensile elongation at break (JIS K7113), also as defined by JIS K7113, of 50% or greater. Materials with a Vicat softening temperature, as defined in JIS K7206 (method A), of 130°C or higher may be employed.

Thermoset resins are curable polymer compounds that form a 3 dimensional mesh structure with increasing temperature. Examples of thermoset resins include phenolic resins, epoxy resins, melamine resins, and urea resins.

In addition to the above thermoplastic resins (including thermoplastic elastomers) and thermoset resins, general purpose resins may also be employed, such as meth(acrylic)-based resins, EVA resins, vinyl chloride resins, fluororesins, and silicone-based resins.

In the present example, explanation follows regarding a case in which the tire frame member 17 is formed from a thermoplastic resin.

The tire frame halves 17A formed using a thermoplastic resin may, for example, be molded using vacuum forming, pressure forming, injection molding, or melt casting. The manufacturing processes can be greatly simplified, and the forming time shortened, in comparison to rubber forming (vulcanizing).

The tire frame member 17 may be configured from a single thermoplastic resin material, or, similarly to conventional ordinary pneumatic tires, may employ thermoplastic resin materials having different characteristics from each other in each of the locations of the tire frame member 17 (the side sections 14, the crown section 16, the bead portions 12, etc.).

A circular ring shaped bead core 15 is embedded in each of the bead portions 12 of the tire frame member 17. The bead core 15 is formed from a steel cord, similarly to in conventional ordinary pneumatic tires. The bead core 15 may be omitted as long as the rigidity of the bead portions 12 is secured, and there are no problems in fitting to a rim 20. The bead core 15 may be formed from a cord other than steel, such as an organic fiber cord, or a cord of organic fiber covered in resin. The bead core 15 may also be formed not from a cord, but from a hard resin, by extrusion molding or the like.

A reinforcement layer 28 formed from a spirally wound steel cord 26 is disposed on the crown section 16 of the tire frame member 17. The reinforcement layer 28 is equivalent to a belt that is disposed at the outer peripheral face of a carcass in a conventional rubber-made pneumatic tire.

Covering layers 24 are formed spanning from the bead portions 12 to the tire frame member 17 at the tire axial direction W outsides of the crown section 16. The end portion of the covering layer 24 on the bead portion 12 side is disposed further to the tire inner side than the close contact portion of the bead portion 12 with the rim 20. The end portion of the covering layer 24 on the tread member 30 side is formed up to the tire axial direction W outside end of the crown section 16. When the tire 10 has been assembled to the rim 20, the covering layer 24 tightly seals an air fill space inner side the tire 10 by making close contact with the rim 20.

A material having a higher weather resistance than the tire frame member 17 may be employed as a covering layer material for configuring the covering layer 24. The covering layer material is preferably a material with better sealing properties than the material configuring the tire frame member 17. The modulus of elasticity of the covering layer 24 is preferably lower than the modulus of elasticity of the tire frame member 17. This thereby enables appropriate sealing to be achieved against the rim 20, while maintaining the rigidity of the tire frame member 17.

A tread member 30 is disposed at the tire radial direction outside of the tire frame member 17. The tread member 30 is disposed along the tire frame member 17, and configures a tire tread, which is a ground contact portion of the tire 10. The tread member 30 is layered onto the tire frame member 17, with an intermediate rubber 34 in between.

The tread member 30 is formed from a rubber with better wear resistance properties than the thermoplastic resin forming the side sections 14. The rubber employed in the tread member 30 may be the same type of rubber to that employed in conventional ordinary rubber-made pneumatic tires. Another type of thermoplastic resin having better wear resistance properties than the thermoplastic resin forming the side sections 14 may be employed to configure the tread member 30.

### Tire Manufacturing apparatus

Explanation next follows regarding a tire manufacturing apparatus 39 for the pneumatic tire 10 which is not according to the present invention, but is useful for understanding the invention.

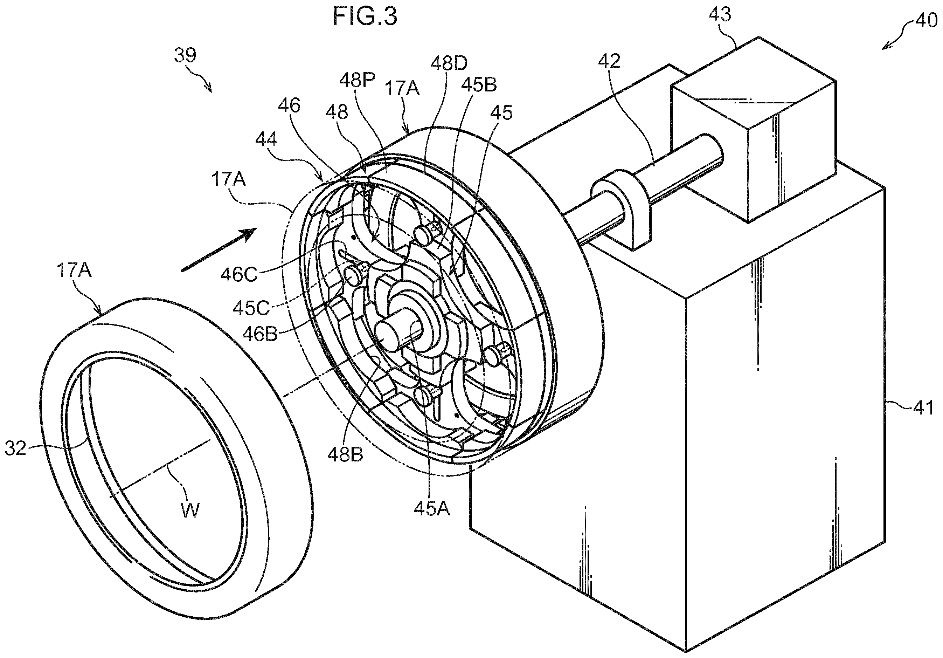

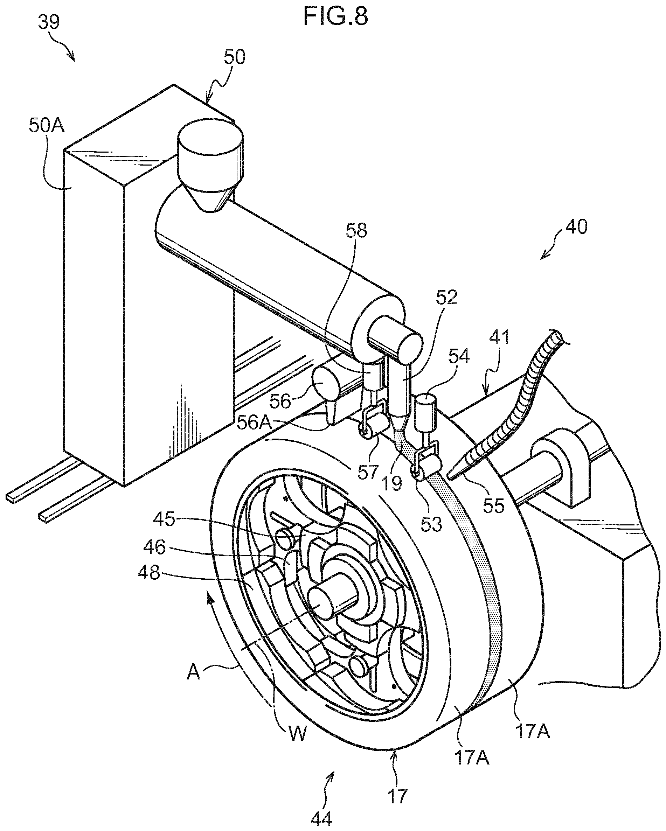

Fig. 3 and Fig. 8 are perspective views illustrating relevant portions of the tire manufacturing apparatus 39 being employed during forming the pneumatic tire 10. The tire manufacturing apparatus 39 includes a forming machine 40 (see Fig. 3) and an extruder machine 50 (see Fig. 8). As illustrated in Fig. 3, the forming machine 40 includes a base 41 that is in contact with the floor. A geared motor 43 that rotates a horizontally disposed shaft 42 is attached to an upper portion of the base 41.

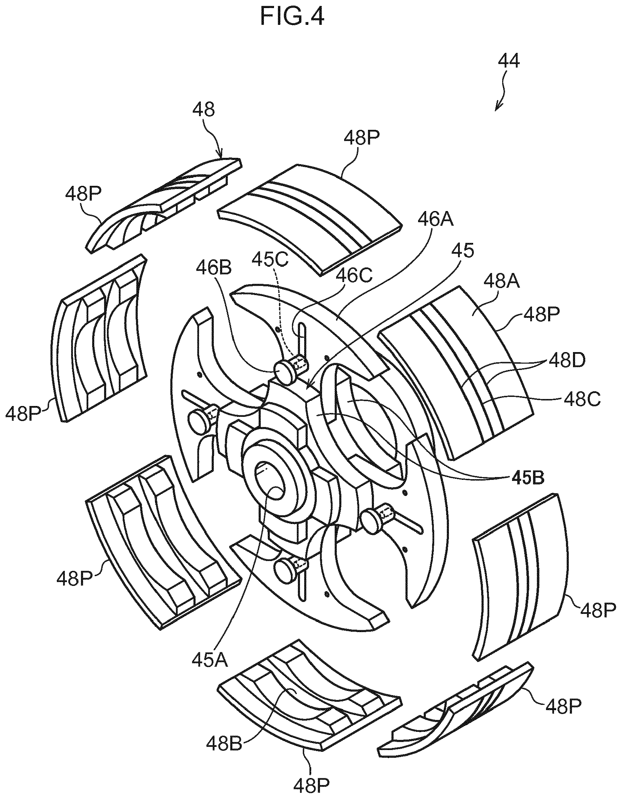

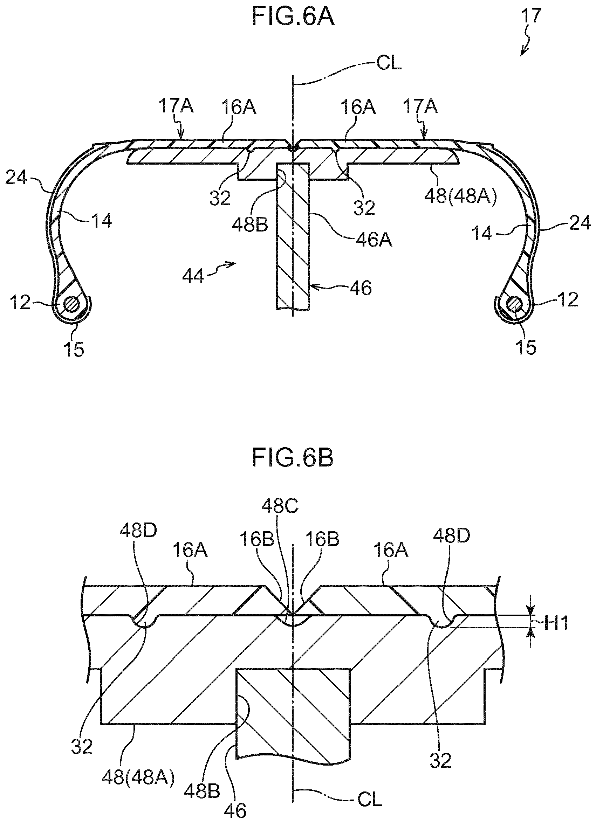

A support jig 44 for supporting the tire frame halves 17A from the tire radial direction inner side is attached to an end side of the shaft 42. As illustrated in Fig. 4, Fig. 5, Fig. 6A, and Fig. 6B, the support jig 44 includes a central attachment section 45, an arm section 46, and a tire support member 48. A hole 45A is formed in the central attachment section 45, for insertion of the shaft 42 through the center. Four stelliform clamp sections 45B are formed so as to project out toward the tire radial direction outside, with the hole 45A at the center thereof. Each of the clamp sections 45B is configured by two plates formed in a row along the tire axial direction, attached such that an arm section 46 is clamped between the two plates. A male thread 45C that is inserted through an elongated hole 46C, described below, is fixed to one of the two plates configuring the clamp sections 45B.

One end of the arm section 46 is clamped to the clamp sections 45B, and extends toward the tire radial direction outside. The other end of the arm section 46 (a tire radial direction leading end portion 46A) is substantially fan shaped and widens out toward the tire radial direction outside, and the outer end is configured in an arc shape. The elongated hole 46C is formed in the arm section 46 at the extension of each of the clamp sections 45B along the tire radial direction. The male thread 45C is inserted through the elongated hole 46C from one side of the arm section 46, and projects out toward the other side. A locking screw 46B formed with a female thread along an inner circumference thereof is screwed onto the male thread 45C. Each of the arm sections 46 is capable of individually extending or retracting in the tire radial direction. During extension or retraction, the locking screw 46B is loosened, the male thread 45C is moved along the elongated hole 46C, and then the locking screw 46B is retightened in the moved position.

The tire support member 48 is configured by eight divided pieces 48P, which together form a circular ring shape in an assembled state to the arm section 46. The outer radius of the tire support member 48 is set so as to be larger than the internal radius of the crown section 16 of the tire frame halves 17A. Each of the divided pieces 48P includes an arc shaped external peripheral face 48A. Indentations 48D are formed in a circular shape in the external peripheral faces 48A over the entire circumference at positions corresponding to the protrusions 32 of the tire frame halves 17A. There are a total of two of the indentations 48D formed in the tire support member 48, with each formed corresponding to one of the tire frame halves 17A. A join indentation 48C is formed between the two indentations 48D, in a straight line around the entire circumference. The join indentation 48C is disposed at a join portion of the pair of tire frame halves 17A, namely, on the tire equatorial plane CL.

A groove 48B is formed at the tire radial direction inner side of the divided pieces 48P. The leading end portion 46A of the arm section 46 is fitted into the respective groove 48B. The groove 48B is deeper at the tire circumferential direction outsides of the divided pieces 48P, and is shallower toward the central portion.

The divided pieces 48P are assembled by engaging the leading end portion 46A of the arm section 46 with the respective groove 48B. The length of the arm section 46 in the tire radial direction is adjusted according to the diameter of the tire support member 48. There is a respective leading end portion 46A disposed at the tire circumferential direction central portion of four out of the eight divided pieces 48P. The other four are disposed so as to straddle between adjacent leading end portions 46A.

As illustrated in Fig. 8, the extruder machine 50 that extrudes the thermoplastic welding material 19 is disposed in the vicinity of the forming machine 40. The extruder machine 50 includes a resin discharge nozzle 52 that discharges molten thermoplastic welding material 19 downwards.

The thermoplastic welding material 19 is preferably the same thermoplastic material as that configuring the tire frame member 17; however, a different thermoplastic material may be employed as long as welding can be achieved. Utilizing the same material enables the entire tire frame member 17 to be configured from a single thermoplastic material, reducing cost. Utilizing a different material enables materials with preferable characteristics to be employed respectively for the thermoplastic material used in the tire frame member, and the thermoplastic welding material 19 used in the join.

A smoothing roller 53 is disposed in the vicinity of the resin discharge nozzle 52 at the rotation direction downstream side of the tire frame member 17 (the arrow A side), for pressing and smoothing the thermoplastic welding material 19 that has adhered to the tire outer surface. A cylinder device 54 is disposed to move the smoothing roller 53 upward or downward. The cylinder device 54 is supported through a frame, not illustrated in the drawings, from a support column 50A of the extruder machine 50.

A cooling air discharge nozzle 55 for discharging cooling air is disposed at the downstream side of the smoothing roller 53 in the tire frame member rotation direction. A fan 56 is disposed at the opposite direction side of the resin discharge nozzle 52 to the tire case rotation direction side (the opposite side to the arrow A direction), and a hot air blocking roller 57 is disposed between the fan 56 and the resin discharge nozzle 52.

The fan 56 is supported by the support column 50A of the extruder machine 50 through the non-illustrated frame. The fan 56 includes a nozzle 56A that blows hot air against a join portion between one of the tire frame halves 17A and the other of the tire frame halves 17A in order to heat the join portion.

A cylinder device 58 is disposed above the hot air blocking roller 57 to move the hot air blocking roller 57 in the up-down direction. The cylinder device 58 is supported by the support column 50Aof the extruder machine 50 through the non-illustrated frame.

### Tire Frame Member Forming Process

Explanation next follows regarding a tire frame member forming process of the present example.

First, the tire frame halves 17A are formed by mold forming with the bead cords 15 embedded therein. Indentations are provided inner side the mold so as to correspond to the protrusions 32, and the protrusions 32 are integrally formed to the tire frame halves 17A. The protrusions 32 have semicircular cross-sections, facilitating de-molding.

Next, the covering layer 24 is formed, from the bead portions 12 of the tire frame halves 17A up to just before the crown section 16. The covering layer 24 can also be formed by molding.

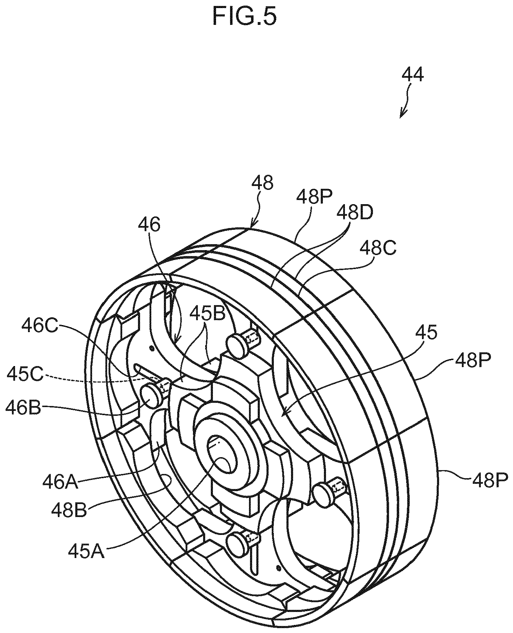

Then, as illustrated in Fig. 5, the support jig 44 is assembled so as to have an external diameter slightly larger than the internal diameter of the tire frame halves 17A. Each of the tire frame halves 17A are fitted onto and attached to the outer peripheral side of the tire support member 48 from the tire axial direction W outside. When this is performed, the protrusions 32 of the tire frame halves 17A engage with the indentations 48D of the tire support member 48.

In the present example, the external diameter of the support jig 44 is larger than the internal diameter of the tire frame halves 17A, thereby enabling movement of the tire frame halves 17A in the tire circumferential direction with respect to the tire support member 48 to be suppressed. The protrusions 32 of the tire frame halves 17A and the indentations 48D of the tire support member 48 are engaged with each other, thereby enabling movement of the tire frame halves 17A in the tire axial direction W with respect to the tire support member 48 to be suppressed. The pair of tire frame halves 17A can thereby be disposed so as to be accurately positioned.

The extruder machine 50 is then moved, and, as illustrated in Fig. 8, the join portion between the two tire frame halves 17A (the tire equatorial plane CL of the tire frame member 17) is disposed beneath the fan 56, the hot air blocking roller 57, the resin discharge nozzle 52, the cylinder device 54, and the cooling air discharge nozzle 55.

The hot air blocking roller 57 and the smoothing roller 53 are then lowered to cause the hot air blocking roller 57 and the smoothing roller 53 to contact the outer periphery of the abutting portion of the two tire frame halves 17A. Hot air from the fan 56 is then blown against the join portion of the pair of tire frame halves 17A while rotating the tire frame member 17 supported by the tire support member 48 in the arrow A direction. The surface of the portion where the thermoplastic welding material 19 will be adhered is thereby progressively softened or melted (pre-heating process).

The pre-heated portion is then moved toward the rotation direction downstream side (the arrow A direction side), and the thermoplastic welding material 19 is extruded in a molten state from the resin discharge nozzle 52, and progressively adhered to the join portion (joining process).

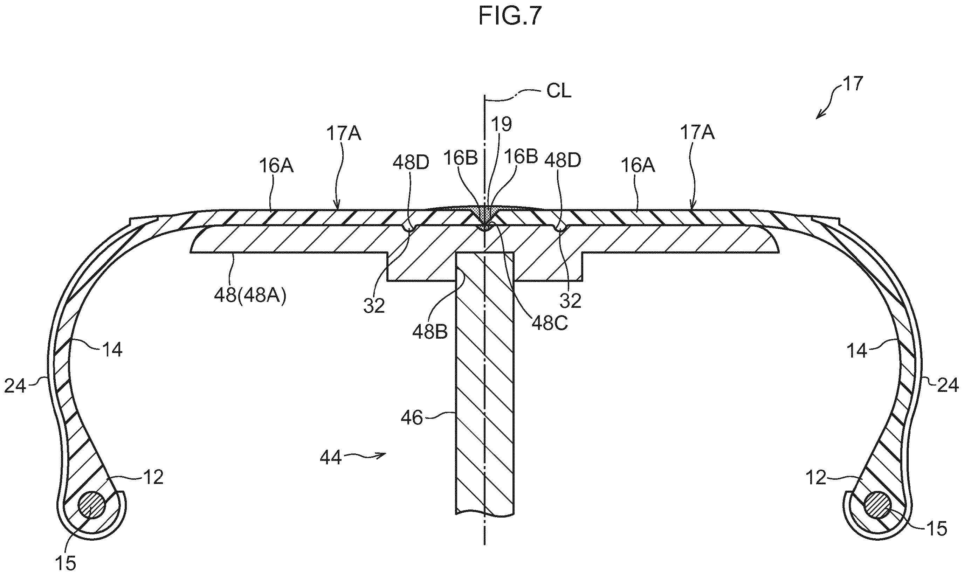

The molten thermoplastic welding material 19 is then progressively pressed from the radial direction outside toward the inner side by the smoothing roller 53, and the surface of the thermoplastic welding material 19 is smoothed so as to be substantially flat. A portion of the thermoplastic welding material 19 is pressed in between the tire frame halves 17A toward the tire radial direction inner side, so as to fill the join indentation 48C formed to the outer peripheral face of the tire support member 48. As illustrated in Fig. 7, at the join portion, a substantially triangular indentation formed by the leading end 16B of one of the crown half sections 16A and the leading end 16B of the other of the crown half sections 16A is thereby filled in by the thermoplastic welding material 19. Part of the molten thermoplastic welding material 19 fills the join indentation 48C, and the molten thermoplastic welding material 19 is adhered at a constant width to the inner peripheral face from the portion where the leading ends 16B abut each other.

Thus in the present example, due to the thermoplastic welding material 19 being adhered to the inner peripheral face at the outer peripheral side of the tire frame halves 17A and a large contact surface area being achieved, a high adhesive strength is obtained, and in particular strength against bending deformation is strengthened.

The thermoplastic welding material 19 that has adhered to the tire frame halves 17A then gradually hardens, the pair of tire frame halves 17A are welded together by the thermoplastic welding material 19, and the tire frame member 17 is obtained with the two tire frame halves 17A completely integrated together.

Next, the extruder machine 50 is retracted, a cord supply device (not illustrated in the drawings) is disposed in the vicinity of the support jig 44, and the heated reinforcement cord 26 is wound in a spiral shape onto the outer peripheral face of the tire frame member 17 to form the reinforcement layer 28. The reinforcement cord 26 can be easily embedded in the resin material by winding on while melting the resin by heating the resin covered steel cord.

One turn of the already vulcanized, band shaped tread member 30 is then wound onto the outer peripheral face of the tire frame member 17 and the tread member 30 is bonded to the outer peripheral face of the tire frame member 17. Bonding is performed here by employing, for example, a bonding agent or non-vulcanized rubber (post processing with sulfur is performed to achieve bonding when non-vulcanized rubber is employed). The tread member 30 may employ a pre-cured tread such as those employed in known remolded tires. The process here is similar to the process to adhere the pre-cured tread to the outer peripheral face of a base tire for a remolded tire.

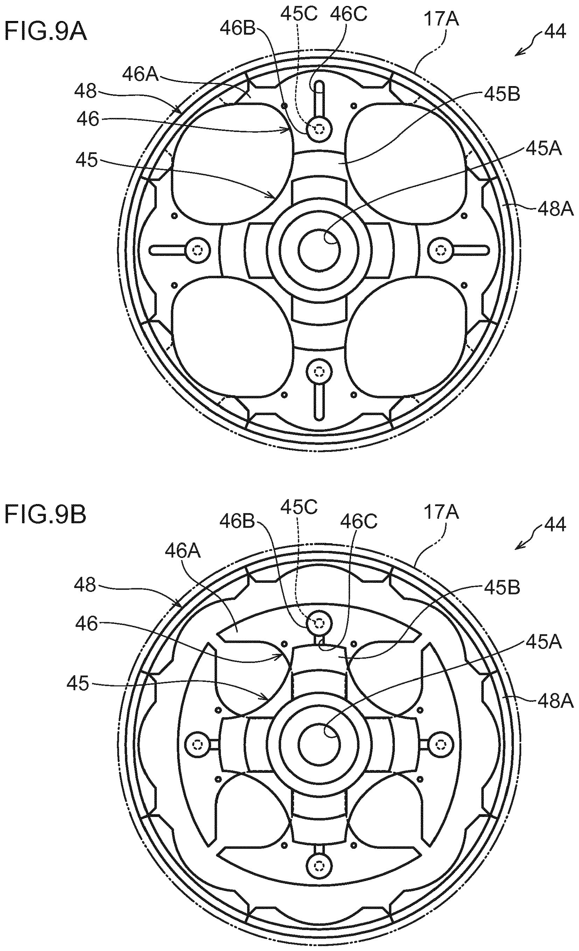

The tire 10 is then removed from the tire support member 48. When this is performed, as illustrated in Fig. 9A, the locking screws 46B are loosened from a state in which the arm sections 46 have been extended and support the tire support member 48, and, as illustrated in Fig. 9B, the arm sections 46 are retracted. The leading end portions 46A are thereby moved away from the tire support member 48, and each of the divided pieces 48P is removed from the inner side of the tire frame member 17. This thereby completes the tire 10.

In the tire 10 of the present example, the protrusions 32 are formed to the tire radial direction inner side face of the crown half sections 16A of the tire frame halves 17A. Thus by engaging the protrusions 32 with the indentations 48D formed to the tire radial direction outside face of the tire support member 48, movement of the tire frame halves 17A in the tire axial direction W with respect to the tire support member 48 can be suppressed. The tire frame halves 17A are thereby supported in an accurate position by the tire support member 48, enabling excellent joining to be obtained.

The protrusions 32 have semicircular cross-sections, enabling strength against deformation when running the tire to be raised. Easy de-molding is also achieved during forming the tire frame halves 17A by molding. The protrusions 32 do not necessarily have to have a semicircular cross-section shape, and may have a triangular shape. However, the corner portions of a cross-section of the protrusions 32 are preferably a rounded shape.

In the present example, the protrusions 32 were formed on the tire frame halves 17A side, and the indentations 48D were formed on the tire support member 48 side, however indentations may be formed on the tire frame halves 17A side, and protrusions may be formed on the tire support member 48 side. Forming the protrusions 32 on the tire frame halves 17A side, as in the present example, means that there are no thin portions formed in the thickness of the tire frame member 17, enabling the strength of the tire to be better maintained than in cases in which indentations are formed on the tire frame halves 17A side.

A step may also be formed by making the thickness at the leading end 16B side of the crown half sections 16A of the tire frame halves 17A thicker, and a step may also be formed on the tire support member 48 side so as to correspond to, and engage with the tire side step.

In the present example, the protrusions 32 are formed in the tire circumferential direction around the entire circumference of the tire frame halves 17A, enabling excellent suppression of movement of the tire frame member 17 in the tire axial direction W with respect to the tire support member 48 of each location in the tire circumferential direction.

### Other Examples and Exemplary Embodiment

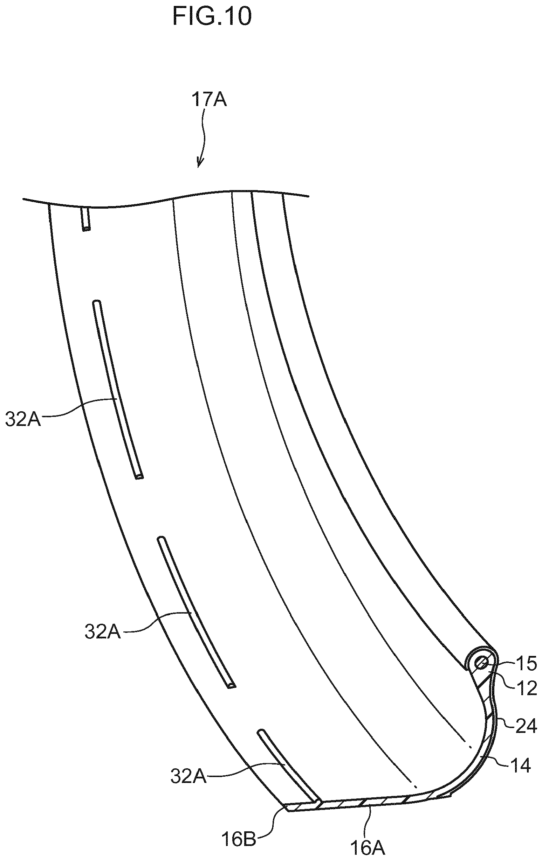

Although in the above example the protrusions 32 are formed around the entire circumference of the tire frame halves 17A in the tire circumferential direction, the protrusions 32 may be configured by segment protrusions 32A that are segmented in the tire circumferential direction as illustrated in Fig. 10.

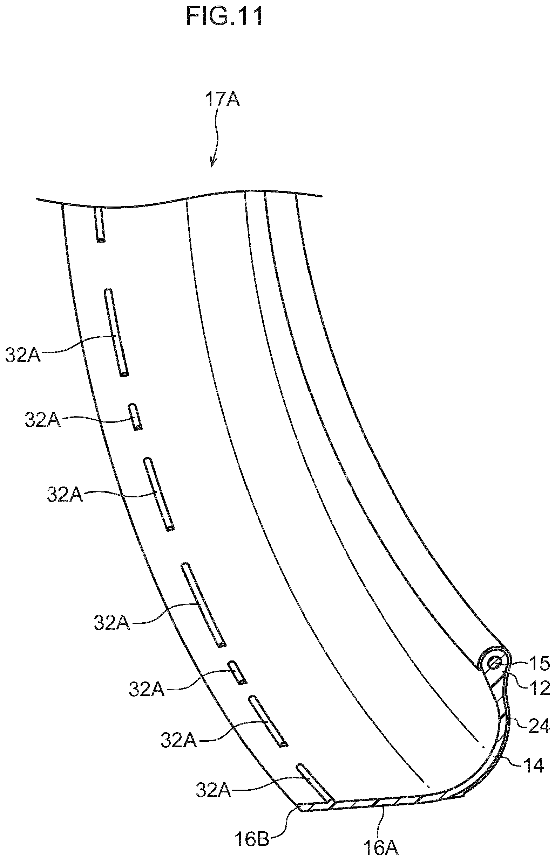

The segment protrusions 32A may be placed periodically in the tire circumferential direction, as illustrated in Fig. 10, or they may be placed irregularly in length and separation, according to the invention, as illustrated in Fig. 11. Irregular placement enables the effects of vibration during running to be suppressed.

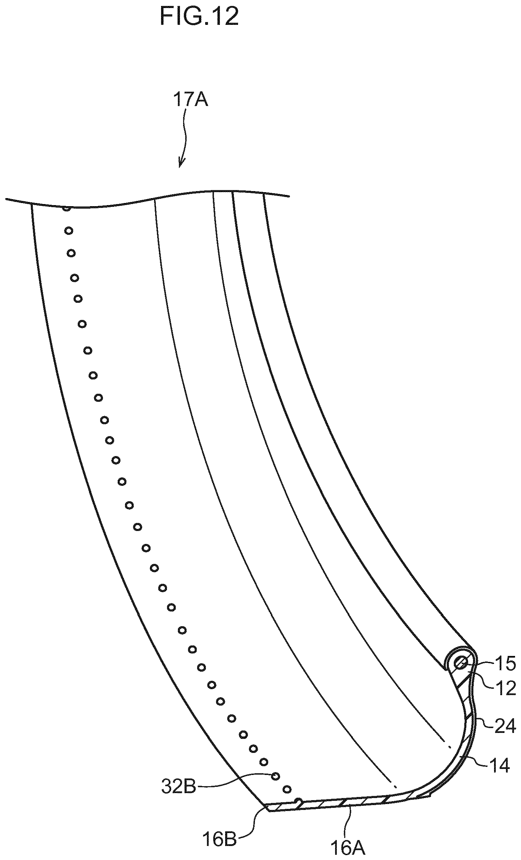

As illustrated in Fig. 12, semispherical shaped protrusion domes 32B may be formed along the tire circumferential direction instead of the segment protrusions 32A.

## Claims

1. A tire (10) comprising:
a tire frame member (17) that is configured from a pair of tire frame halves (17A), each configured using a resin material and including a bead portion (12), a side section (14), and a half-width crown half section (16A), the tire frame halves (17A) being aligned with each other and joined together at leading ends of the crown half sections (16A); and
an engagement section (32) that is formed on a tire radial direction inner side face of each of the crown half sections (16A), further to a tire width direction outer side than a joining portion between the crown half sections (16A), for engaging with an outer face of a support jig (44) that supports the pair of tire frame halves (17A) from the tire radial direction inner side during joining so as to restrict movement in a tire width direction (W) with respect to the support jig (44), wherein the engagement section (32) is formed along a tire circumferential direction; **characterised in that**
the engagement section (32) is segmented into a plurality of segments (32A) in the tire circumferential direction, which are disposed irregularly in the tire circumferential direction.

2. The tire (10) of claim 1, wherein the engagement section (32) is protrusion shaped so as to project from the tire radial direction inner side face of the crown half section (16A).

3. A tire manufacturing apparatus (39) comprising:
a plurality of arm sections (46) capable of expanding or contracting in a tire radial direction and extending toward a tire radial direction outer side;
a tire support member (48) that is supported from a tire radial direction inner side by leading end portions of the arm sections (46) disposed at the tire radial direction outer side, that is segmented into a plurality of segments (48P) in a tire circumferential direction, that has an external face forming a circular ring shape around an inside periphery of a tire frame member (17), that contacts an inner face of the tire frame member (17), and that supports a pair of tire frame halves (17A) from the tire radial direction inner side; and
a support engagement section (48D) that is formed on a tire radial direction outer face (48A) of the tire support member (48), and that engages with an engagement section (32) formed further to a tire width direction outer side than a joining portion between the tire frame halves (17A), wherein the engagement section (32) is formed along a tire circumferential direction; **characterised in that**
the engagement section (32) is segmented into a plurality of segments (32A) in the tire circumferential direction, which are disposed irregularly in the tire circumferential direction.

4. The tire manufacturing apparatus (39) of claim 3, wherein the support engagement section (48D) is an indentation formed at the tire radial direction outer face (48A) of the tire support member (48).

5. The tire manufacturing apparatus (39) of claim 3, wherein the support engagement section (48D) is formed along an entire circumference in the tire circumferential direction.

6. A tire manufacturing method for manufacturing the tire of claim 1 or claim 2 using the tire manufacturing apparatus (39) of claim 3, the tire manufacturing method comprising:
engaging the engagement section (32) with the support engagement section (48D);
adding a resin material and joining the pair of tire frame halves (17A);
retracting the leading end portions (46A) of the arm sections (46) to the tire radial direction inner side and separating the leading end portions (46A) of the arm sections (46) from the tire support member (48); and
removing the tire support member (48) from the inner side of the tire frame halves (17A).

## Patentansprüche

1. Reifen (10), Folgendes beinhaltend:
ein Reifenrahmenglied (17), welches aus einem Paar von Reifenrahmenhälften (17A) konfiguriert ist, welche jeweils unter Verwendung eines Harzmaterials konfiguriert sind und einen Wulstabschnitt (12), einen Seitenabschnitt (14) und einen Kronen-Halbabschnitt mit halber Breite (16A) umfassen, wobei die Reifenrahmenhälften (17A) miteinander ausgefluchtet sind und an vorderen Enden der Kronen-Halbabschnitte (16A) zusammengefügt sind; und
einen Eingriffsabschnitt (32), welcher an einer Reifenradialrichtungs-Innenseitenfläche eines jeden der Kronen-Halbabschnitte (16A) gebildet ist, weiter in Richtung einer Reifenbreitenrichtungs-Außenseite als ein Zusammenfügungsabschnitt zwischen den Kronen-Halbabschnitten (16A), zum Eingriff mit einer äußeren Fläche einer Stützvorrichtung (44), welche das Paar von Reifenrahmenhälften (17A) von der Reifenradialrichtungs-Innenseite im Zuge des Zusammenfügens stützt, um so Bewegung in einer Reifenbreitenrichtung (W) in Bezug auf die Stützvorrichtung (44) zu beschränken, wobei der Eingriffsabschnitt (32) entlang einer Reifenumfangsrichtung gebildet ist,
**dadurch gekennzeichnet, dass** der Eingriffsabschnitt (32) in eine Vielzahl von Segmenten (32A) in der Reifenumfangsrichtung segmentiert ist, welche unregelmäßig in der Reifenumfangsrichtung verteilt angeordnet sind.

2. Reifen (10) nach Anspruch 1, bei welchem der Eingriffsabschnitt (32) vorsprungartig geformt ist, um von der Reifenradialrichtungs-Innenseitenfläche des Kronen-Halbabschnittes (16A) vorzuspringen.

3. Reifenherstellungsgerät (39), Folgendes beinhaltend:
eine Vielzahl von Armabschnitten (46), welche in der Lage sind, sich in einer Reifenradialrichtung zu expandieren oder zusammenzuziehen und sich in eine Reifenradialrichtungs-Außenseite zu erstrecken;
ein Reifenstützglied (48), welches von einer Reifenradialrichtungs-Innenseite gestützt wird durch vordere Endabschnitte der Armabschnitte (46), welche an der Reifenradialrichtungs-Außenseite angeordnet sind, welches in eine Vielzahl von Segmenten (48P) in einer Reifenumfangsrichtung segmentiert ist, welches eine Außenfläche besitzt, welche eine kreisförmige Ringform rund um einen Innenumfang eines Reifenrahmengliedes (17) bildet, welches mit einer Innenfläche des Reifenrahmengliedes (17) in Kontakt geht und welches ein Paar von Reifenrahmenhälften (17A) von der Reifenradialrichtungs-Innenseite stützt; und
einen Stützeingriffsabschnitt (48D), welcher an einer Reifenbreitenrichtungs-Außenseitenfläche (48A) des Reifenstützgliedes (48) gebildet ist und mit einem Eingriffsabschnitt (32) in Eingriff geht, welcher weiter in Richtung einer Reifenbreitenrichtungs-Außenseite gebildet ist als ein Zusammenfügungsabschnitt zwischen den Reifenrahmenhälften (17A), wobei der Eingriffsabschnitt (32) entlang einer Reifenumfangsrichtung gebildet ist;
**dadurch gekennzeichnet, dass** der Eingriffsabschnitt (32) in eine Vielzahl von Segmenten (32A) in der Reifenumfangsrichtung segmentiert ist, welche unregelmäßig in der Reifenumfangsrichtung verteilt angeordnet sind.

4. Reifenherstellungsgerät (39) nach Anspruch 3, bei welchem der Stützeingriffsabschnitt (48D) eine Einbuchtung ist, welche an der Reifenradialrichtungs-Außenfläche (48A) des Reifenstützgliedes (48) gebildet ist.

5. Reifenherstellungsgerät (39) nach Anspruch 3, bei welchem der Stützeingriffsabschnitt (48D) entlang eines vollständigen Umfanges in der Reifenumfangsrichtung gebildet ist.

6. Reifenherstellungsverfahren zum Herstellen des Reifens nach Anspruch 1 oder 2 unter Verwendung des Reifenherstellungsgerätes (39) nach Anspruch 3, wobei das Reifenherstellungsverfahren Folgendes beinhaltet:
Ineingriffbringen des Eingriffsabschnittes (32) mit dem Stützeingriffsabschnitt (48D);
Hinzufügen eines Harzmaterials und Zusammenfügen des Paars von Reifenrahmenhälften (17A);
Zurückziehen der vorderen Endabschnitte (46A) der Armabschnitte (46) in Richtung der Reifenradialrichtungs-Innenseite und Trennen der vorderen Endabschnitte (46A) der Armabschnitte (46) vom Reifenstützglied (48); und
Entfernen des Reifenstützgliedes (48) von der Innenseite der Reifenrahmenhälften (17A).

## Revendications

1. Pneu (10) comprenant :
un élément d'ossature de pneu (17) qui est formé d'une paire de moitiés d'ossature de pneu (17A), chacune étant configurée en utilisant une matière de résine et incluant une partie de talon (12), une partie latérale (14) et une demi-section de nappe de sommet de demi-largeur (16A), les moitiés d'ossature (17A) étant alignées l'une avec l'autre et jointes au niveau d'extrémités d'attaque des demi-sections de nappe de sommet (16A), et
une section de mise en prise (32) qui est formée sur une face du côté intérieur dans le sens radial du pneu de chacune des demi-sections de nappe de sommet (16A), plus sur un côté extérieur dans le sens de la largeur du pneu que sur une partie de jonction entre les deux demi-sections de nappe de sommet (16A), destinée à mettre en prise une face extérieure d'un bâti de support (44) qui supporte la paire de moitiés d'ossature de pneu (17A) à partir de leur côté intérieur dans le sens radial du pneu pendant l'assemblage, de façon à limiter leur déplacement dans le sens de la largeur du pneu (W) par rapport au bâti de support (44), dans lequel la section de mise en prise (32) est formée le long d'une direction circonférentielle du pneu,
**caractérisé en ce que** la section de mise en prise (32) est segmentée en une pluralité de segments (32A) dans le sens circonférentiel du pneu qui sont disposés irrégulièrement selon la direction circonférentielle du pneu.

2. Pneu (10) selon la revendication 1, dans lequel la section de mise en prise (32) est formée de manière à faire saillie depuis la face du côté intérieur dans le sens radial du pneu de la demi-section de nappe de sommet (16A).

3. Dispositif de fabrication de pneu (39) comprenant :
une pluralité de parties de bras (46) capables de s'agrandir ou de se resserrer dans le sens radial du pneu et de s'étendre vers un côté extérieur dans le sens radial du pneu,
un élément de support du pneu (48) qui est supporté à partir d'un côté intérieur dans le sens radial du pneu par des parties d'extrémité d'attaque des parties de bras (46) disposées au niveau du côté extérieur dans le sens radial du pneu, qui est segmenté en une pluralité de segments (48P) dans le sens circonférentiel du pneu, qui comporte une face externe formant un anneau circulaire autour d'une périphérie intérieure d'un élément d'ossature de pneu (17), qui entre en contact avec une face intérieure de l'élément d'ossature de pneu (17), et qui supporte une paire de moitiés d'ossature de pneu (17A) par leur côté intérieur dans le sens radial du pneu, et
une section de support de mise en prise (48D) qui est formée sur une face extérieure (48A) dans le sens radial du pneu de l'élément de support de pneu (48), et qui met en prise une section de mise en prise (32) formée plus sur un côté extérieur dans le sens de la largeur du pneu que sur une partie de jonction entre les deux moitiés d'ossature de pneu (17A), dans lequel la section de mise en prise (32) est formée le long d'une direction circonférentielle du pneu,
**caractérisé en ce que** la section de mise en prise (32) est segmentée en une pluralité de segments (32A) dans le sens circonférentiel du pneu, qui sont disposés irrégulièrement dans le sens circonférentiel du pneu.

4. Dispositif de fabrication de pneu (39) selon la revendication 3, dans lequel la section de support de mise en prise (48D) est une encoche formée sur le côté extérieur dans le sens radial du pneu (48A) de l'élément de support du pneu (48).

5. Dispositif de fabrication de pneu (39) selon la revendication 3, dans lequel la section de support de mise en prise (48D) est formée le long de la circonférence entière dans le sens circonférentiel du pneu.

6. Procédé de fabrication d'un pneu pour fabriquer le pneu selon la revendication 1 ou 2 en utilisant le dispositif de fabrication de pneu (39) selon la revendication 3, le procédé de fabrication d'un pneu comprenant :
la mise en prise de la section de mise en prise (32) avec la section de support de mise en prise (48D),
l'ajout d'une matière de résine et l'assemblage de la paire de moitiés d'ossature de pneu (17A),
la rétraction des parties d'extrémité d'attaque (46A) des parties de bras (46) vers le côté intérieur dans le sens radial du pneu et la séparation des parties d'extrémité d'attaque (46A) des parties de bras (46) de l'élément de support de pneu (48) ; et
l'enlèvement de l'élément de support de pneu (48) du côté intérieur des moitiés d'ossature de pneu (17A).
